Europäisches Patentamt

European Patent Office

Office européen des brevets

(19)

(11) Veröffentlichungsnummer : **0 036 156**
**B1**

(12) **EUROPÄISCHE PATENTSCHRIFT**

(45) Veröffentlichungstag der Patentschrift :
08.02.84

(21) Anmeldenummer : 81101681.5

(22) Anmeldetag : 07.03.81

(51) Int. Cl.³ : **C 09 J  5/00, C 09 J  3/04,**
**B 32 B  5/22, B 32 B  7/12,**
**B 44 C  7/00, D 06 N  7/00//**
**C08K3/30, C08K3/32**

(54) Verfahren zum Verkleben von Tapeten auf Untertapeten und danach hergestellter flächiger Verbund.

(30) Priorität : 15.03.80 DE 3010047

(43) Veröffentlichungstag der Anmeldung :
23.09.81 Patentblatt 81/38

(45) Bekanntmachung des Hinweises auf die Patenterteilung : 08.02.84 Patentblatt 84/06

(84) Benannte Vertragsstaaten :
AT BE CH DE FR GB IT LI NL SE

(56) Entgegenhaltungen :
DE-A- 1 932 893
DE-A- 2 244 775
DE-A- 2 712 826
DE-A- 2 811 071
DE-A- 2 909 714

(73) Patentinhaber : HOECHST AKTIENGESELLSCHAFT
Postfach 80 03 20
D-6230 Frankfurt am Main 80 (DE)

(72) Erfinder : Lauterbach, Uwe
Werner Hilpert Stasse 25
D-6200 Wiebaden (DE)
Erfinder : Michel, Wolfgang
Am Hohen Stein 24
D-6200 Wiesbaden (DE)

## Verfahren zum Verkleben von Tapeten auf Untertapeten und danach hergestellter flächiger Verbund

Die Erfindung betrifft ein Verfahren zum Verkleben von Tapeten auf Wandverkleidungsplatten oder -folien aus einem geschäumten Polystyrol und einen flächenförmigen Verbund zur Wandverkleidung.

Wandverkleidungsplatten oder -folien, insbesondere aus Polystyrolschaum, sind allgemein bekannt und dienen als sogenannte Untertapeten zum Verkleiden von Wänden vor dem Aufkleben einer Tapete ; im Handel sind neben Platten in gefalteter oder ungefalteter Form auch Folienrollen anzutreffen. Sie zeichnen sich im allgemeinen durch eine rechteckige Raumform aus, ihre Länge und Breite sind dabei im Verhältnis wesentlich größer als ihre Dicke. Mit diesen Platten oder Folien kann man beispielsweise Mauerrisse verkleiden, eine gewisse Wärmedämmung erzielen und die Schwitzwasserbildung verhindern.

Ein gewisser Nachteil derartiger Wandverkleidungsplatten oder -folien kann darin bestehen, daß bei übergroßer Wärmeeinwirkung, z. B. durch offene Flammen bedingt, das meist thermoplastische Polymere noch unterhalb des Flammpunktes einer aufgeklebten Tapete zu schmelzen und/oder die Schaumstruktur zusammenzubrechen beginnen. Dabei entsteht zwischen Tapete und Wand ein Hohlraum, so daß bei Erreichen des Flammpunktes auch der Tapete, diese — begünstigt durch diesen Hohlraum — sehr leicht abbrennt. Um diesen Nachteil zu beheben, ist es bekannt, die Wandverkleidungsplatte oder -folie, die Tapete oder beide flammfest auszurüsten. Oftmals ist jedoch diese spezielle Ausrüstung nicht erforderlich, so daß sie dann unnötigerweise die Herstellung dieser Produkte umständlicher und teurer macht.

Aus der DE-A 19 32 893 ist eine Klebstoffkomposition für das Verkleben von geformten Gebilden aus Polystyrolschaumstoff untereinander oder auf einen von Polystyrol verschiedenen Träger bekannt. Der Klebstoff ist ein Dispersionskleber, der a) Haftklebepolymere, b) Flammschutzmittel und c) ein nichthärtbares Harz enthält. Zu den Haftklebepolymeren zählen ausschließlich vollsynthetische Polymere, die in wäßriger Dispersion oder in Lösung oder Dispersion in organischen Lösemitteln vorliegen. Als von Polystyrol verschiedene Träger werden solche genannt, die undurchlässig für Wasser und Wasserdampf sind.

In der DE-A 28 11 071 wird eine spezielle vollsynthetische Copolymerlatex als Komponente in einem flammhemmenden Klebstoff beschrieben, wobei u. a. auch angegeben ist, daß solche Zusammensetzungen zum Verkleben von aufgeschäumten Kunststoff-Filmen (z. B. aus Polystyrol) mit Papier geeignet sein können.

Aufgabe der vorliegenden Erfindung ist es deshalb, ein Verfahren zum Verkleben von Tapeten auf Wandverkleidungsplatten oder -folien vorzuschlagen, wonach der so hergestellte Verbund eine verbesserte Stabilität gegen Wärmeeinwirkung, insbesondere durch offene Flammen verursacht, aufweist, ohne daß das Platten- oder Folienmaterial selbst oder das Material einer aufgeklebten oder aufzuklebenden Tapete flammfest ausgerüstet werden müssen.

Diese Aufgabe wird gelöst durch ein Verfahren zum Verkleben von Tapeten auf Wandverkleidungsplatten oder -folien aus geschäumtem Polystyrol und ist dadurch gekennzeichnet, daß ein Klebstoff eingesetzt wird, der als klebende Komponente ein Polysaccharidderivat und, bezogen auf seinen klebenden Anteil, 20 bis 80 Gew.-% eines flammhemmenden Mittels enthält.

Die Platte oder Folie aus geschäumtem Polystyrol wird insbesondere aus extrudiertem Polystyrolschaum hergestellt. Verfahren zur Herstellung solcher Platten oder Folien oder die Materialien selbst sind beispielsweise aus den DE-GM 75 19 827, 76 16 504, 76 16 521, 79 31 745, der GB-PS 1 046 374, der DE-AS 17 94 174 oder der DE-OS 25 47 082 bekannt. Die aufgeklebten Tapeten werden meistens aus auf der Basis von Cellulosefasern hergestellten Papiermassen erzeugt, es sind jedoch auch Papiermassen im Gebrauch, die neben Cellulosefasern Synthesefasern wie Polyolefinfasern enthalten oder aus diesen bestehen. Erfindungsgemäß können aber auch Tapeten auf textiler Basis oder auf der Basis von Folien aus synthetischen Polymeren eingesetzt werden.

Vor dem Verkleben der Tapete kann die Untertapete aus geschäumtem Polystyrol noch mit einem Haftvermittler beschichtet werden, um die spätere Haftung der aufzuklebenden Tapete noch zu erhöhen. Diese spezielle haftvermittelnde Ausrüstung kann auch bereits beim Hersteller der Untertapete aufgebracht werden.

Üblicherweise werden zum Verkleben von Tapeten die verschiedenartigsten Klebstoffe aus natürlichen, halbsynthetischen oder synthetischen Polymeren verwendet ; in der Praxis haben sich insbesondere wasserlösliche oder in Wasser aufweichbare Klebstoffe in den Vordergrund geschoben, da diese das Entfernen von damit aufgeklebten Tapeten von der Wand und/oder einer Wandverkleidung erleichtern und eine umweltfreundliche Entfernungsmethode ohne Einsatz von organischen Lösemitteln gestatten ; sie enthalten als klebende komponente ein Polysaccharidderivat. Als Polysaccharidderivate sind im Rahmen der Erfindung beispielsweise die folgenden geeignet : Alkylcellulosen wie Methyl- und Ethylcellulose, Hydroxyalkylcellulosen wie Hydroxyethylcellulose, deren Mischether wie Methyl-hydroxyethyl-, Methyl-hydroxypropyl- oder Ethyl-hydroxyethylcellulose, aber auch Mischether, die einen ionischen Substituenten tragen, wie Methyl-carboxymethylcellulose ; Stärkeether, substituierte und unsubstituierte Pflanzengummen wie Johannisbrotkernmehl, Carboxymethyl- oder Sulfoethylcellulose, oxidierte Cellulosen, Alginate, Alginsäureester, Carboxymethylstärke, Stärkephosphate sowie Gemische dieser Verbindungen. Die Polysacchariddderivate werden deshalb als Basiskomponente des Klebstoffs eingesetzt, weil sie in wäßrigem Medium aufgebracht werden können ; sie werden in der Regel als Pulver oder Granulat an den gewerblichen oder privaten Anwender geliefert und von ihm ins Wasser eingemischt, so daß sich ein gebrauchsfertiges, verstreichbares Klebemittel ergibt. Neben den bereits genannten klebenden Polymeren können die Klebstoffe auch noch eine oder mehrere nichtklebende, in Wasser lösliche oder dispergierbare Verbindung(en) — z. B. zur Beeinflussung der Klebkraft, als Einrührhilfe, als Dispergiermittel usw. — wie Polyalkylenglykole, Polyethylen, Polyalkylenglykolether oder -ester, Polyolefinoxide, Fettalkohole, Fettsäuren, Seifen, Glyceride, Fettamide, Wachsalkohole, Wachse, Esterwachse, Saccharide oder Salze enthalten ; es können daneben die üblichen Zusätze wie Netz-, Antischaum-, Konservierungs-, Parfümierungsmittel, Füllstoffe oder Pigmente zugesetzt werden.

Erfindungsgemäß enthält der Klebstoff auch ein flammhemmendes Mittel (Flammschutzmittel), das entweder bereits beim Hersteller des pulver- oder granulatförmigen Klebstoffs eingearbeitet oder vom Verbraucher beim Anrühren des Kleisters beigemischt wird. Das Flammschutzmittel ist bevorzugt ein fließfähiger, kleinteiliger Feststoff, der insbesondere wasserlöslich oder in Wasser dispergierbar ist, er kann jedoch auch in flüssiger Form allein oder aufgebracht auf ein Trägermaterial wie einem Silikat eingesetzt werden ; es werden, bezogen auf den klebenden Anteil des Klebstoffs, 20 bis 80 Gew.-% des Flammschutzmittels zugesetzt. Derartige Flammschutzmittel oder flammschützend ausgerüstete Klebstoffe werden beispielsweise beschrieben in den DE-PS 12 88 313 und 15 94 190 oder den DE-OS 24 36 166, 25 12 318, 25 32 521, 25 41 555, 25 59 127, 27 10 498, 27 32 561, 27 59 132, 28 44 132, 29 00 155 und 29 00 535. Flammschutzmittel sind (siehe z. B. Römpps Chemie-Lexikon, 7. Auflage, 1976, Franckh'sche Verlagsbuchhandlung, S. 1138 ff.) in der Regel verkohlungsfördernde, sperrschichtbildende oder dammschichtbildende Stoffe.

Das erfindungsgemäße Verfahren kann direkt vom Hersteller angewandt werden, der dann vorgefertigte flächenförmige Verbunde zur späteren Wandverkleidung herstellt, die bereits eine aufgeklebte Tapete aufweisen, wonach dann der Verbraucher nur noch diesen Verbund an der Wand anbringen muß, oder beim Verbraucher zur Anwendung kommen, der die einzelnen Komponenten Wandverkleidungsplatte oder -folie, Klebstoff ohne oder bereits mit eingearbeitetem Flammschutzmittel, gegebenenfalls noch das separate Flammschutzmittel und Tapete kombinieren muß. Die spezielle Flammfestausrüstung des Klebstoffs hat zur Folge, daß der flächige Verbund aus geschäumter Polystyrolplatte oder -folie, Klebstoff und Tapete widerstandsfähiger gegen Flammeneinwirkung ist als ein gleichartig aufgebauter Verbund ohne die erfindungsgemäße Flammfestausrüstung. Durch den bloßen Zusatz des Flammschutzmittels zum Klebstoff ist eine einfache Methode gefunden worden, diesen Zusatz dort anzuwenden, wo es das Einsatzgebiet tatsächlich erforderlich macht, z. B. in Räumen mit offenen Flammen wie Kaminzimmern oder in Räumen mit anderen offenen Feuerstellen, so daß auf eine Flammfestausrüstung der anderen Verbundkomponenten verzichtet werden kann. Dadurch ist beispielsweise auch eine spezielle, aufwendige Herstellung und Lagerhaltung von jeweils unmodifizierten und flammfest-ausgerüsteten Untertapeten und Tapeten nicht bzw. nicht mehr erforderlich.

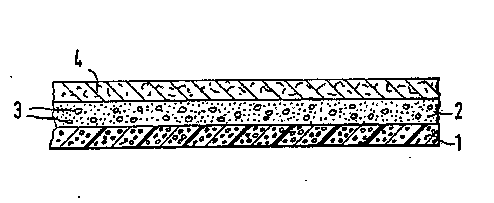

Die Zeichnung zeigt einen Ausschnitt aus einem erfindungsgemäß hergestellten Verbund, wobei die jeweiligen Schichten nicht in einem maßstabsgerechten Verhältnis zueinander dargestellt sind ; zwischen der Platte oder Folie 1 aus geschäumtem Polystyrol und der Tapete 4 befindet sich die Klebstoffschicht 2 mit den eingelagerten Teilchen 3 eines Flammschutzmittels.

Die Erfindung wird auch noch durch die folgenden Beispiele erläutert.

Beispiel 1

Ein Prüfkörper, der wie folgt aufgebaut ist, wird nach DIN 4102, Teil 1, Pos. 6.2 in Anlehnung an DIN 53 438 « Prüfung von brennbaren Werkstoffen — Verhalten beim Beflammen mit einem Brenner » untersucht. Der Prüfkörper weist eine Basisplatte aus 5 mm dickem Asbestzement einer Fläche von 90 mm · 230 mm auf, auf die eine 3 mm dicke Untertapete aus geschäumtem extrudiertem Polystyrol mit einem handelsüblichen spachtelbaren Kunststoffdispersionskleber aufgeklebt wird. Nach Aufbringen einer Haftvermittlerschicht aus dem gleichen, zusätzlich mit Wasser verdünnten Kleber, wird auf diesen Untergrund nach dessen Trocknung eine handelsübliche Prägetapete eines Gewichts von 180 g/m$^2$ mit einem Klebstoff, der 50 Gew.-Teile einer Methyl-hydroxyethylcellulose einer Viskosität von 1 500 mPa · s (nach Höppler in 2 %iger wäßriger Lösung bei 20 °C) und 50 Gew.-Teile eines in Wasser dispergierbaren, flammhemmenden Mittels auf der Basis von Ammoniumpolyphosphat enthält und der mit Wasser etwa im Verhältnis von 1 : 20 zum Kleister angerührt wird, aufgeklebt. Im Gegensatz zu einem Prüfkörper, der mit einem Tapetenkleister ohne Zusatz eines flammhemmenden Mittels erzeugt und als leicht entflammbar eingestuft wird, kann der erfindungsgemäß hergestellte Prüfkörper als normal — d. h. im Verhältnis schwerer — entflammbar eingestuft werden.

Beispiel 2

Es wird nach den Angaben des Beispiels 1 verfahren, aber mit einem Tapetenklebstoff, der 50 Gew.-Teile eines wasserlöslichen flammhemmenden Mittels auf der Basis von Ammoniumsulfamat enthält. Die Eigenschaften sind wie in Beispiel 1 beschrieben.

Beispiel 3

Es wird nach den Angaben des Beispiels 1 verfahren, aber mit einem Tapetenklebstoff, der je 25 Gew.-Teile der in den Beispielen 1 und 2 beschriebenen flammhemmenden Mittel enthält. Die Eigenschaften sind wie in Beispiel 1 beschrieben.

Beispiel 4

Es wird nach den Angaben des Beispiels 1 verfahren, aber bei der Verklebung der Untertapete mit einem handelsüblichen streich- oder rollbaren Kunststoffdispersionskleber, einer Leimdruck-Papiertapete eines Gewichts von 120 g/m² und einem Tapetenklebstoff, der 35 Gew.-Teile einer Methyl-hydroxyethylcellulose einer Viskosität von 6 000 mPa·s, und je 30 Gew.-Teile der in den Beispielen 1 und 2 beschriebenen flammhemmenden Mittel enthält. Die Eigenschaften sind wie in Beispiel 1 beschrieben.

## Ansprüche

1. Verfahren zum Verkleben von Tapeten auf Wandverkleidungsplatten oder -folien aus geschäumtem Polystyrol, dadurch gekennzeichnet, daß ein Klebstoff eingesetzt wird, der als klebende Komponente ein Polysaccharidderivat und, bezogen auf seinen klebenden Anteil, 20 bis 80 Gew.-% eines flammhemmenden Mittels enthält.

2. Verfahren nach Anspruch 1, dadurch gekennzeichnet, daß das flammhemmende Mittel fließfähig, kleinteilig und wasserlöslich oder in Wasser dispergierbar ist.

3. Verfahren nach Anspruch 1 oder 2, dadurch gekennzeichnet, daß das Polysaccharidderivat ein wasserlöslicher Cellulose-ether ist.

4. Flächenförmiger Verbund zur Wandverkleidung auf der Basis einer Platte oder Folie aus geschäumtem Polystyrol mit einer aufgeklebten Tapete, dadurch gekennzeichnet, daß die zwischen der Platte oder Folie und der Tapete angeordnete Klebstoffschicht als klebende Komponente ein Polysaccharidderivat und, bezogen auf ihren klebenden Anteil, 20 bis 80 Gew.-% eines flammhemmenden Mittels enthält.

## Claims

1. A process for bonding wallpapers to wall insulation boards or films of foamed polystyrene, wherein the adhesive used contains as the bonding component a polysaccharide derivative and between 20 and 80 % by weight of a flame retardant, relative to the bonding portion of the adhesive.

2. A process as claimed in claim 1, wherein the flame retardant is capable of flowing, present in particulate form and soluble or dispersible in water.

3. A process as claimed in claim 1 or 2, wherein the polysaccharide derivative is a water-soluble cellulose ether.

4. A composite sheeting for covering walls, on the basis of a board or film of foamed polystyrene, to which a wallpaper is bonded, wherein the adhesive layer being applied between the board or film and the wallpaper contains as the bonding component a polysaccharide derivative and between 20 and 80 % by weight of a flame retardant, relative to the bonding portion of the adhesive.

## Revendications

1. Procédé pour le collage de revêtements de surface sur des panneaux ou des feuilles de recouvrement des murs, en polystyrène cellulaire, caractérisé en ce qu'on utilise une colle qui contient comme constituant adhésif un dérivé de polysaccharide et, par rapport à la proportion d'adhésif, de 20 à 80 % en poids d'un agent retardant l'inflammation.

2. Procédé selon la revendication 1, caractérisé en ce que l'agent retardant l'inflammation est fluide, finement divisé et soluble ou dispersable dans l'eau.

3. Procédé selon l'une des revendications 1 ou 2, caractérisé en ce que le dérivé de polysaccharide est un éther cellulosique soluble dans l'eau.

4. Composite plat pour le recouvrement des murs, formé d'un panneau ou d'une feuille de polystyrène cellulaire avec un revêtement de surface collé dessus, caractérisé en ce que la couche de colle appliquée entre le panneau ou la feuille et le revêtement de surface, contient comme constituant adhésif un dérivé de polysaccharide et, par rapport à la proportion d'adhésif, de 20 à 80 % en poids d'un agent retardant l'inflammation.